# EUROPÄISCHE PATENTSCHRIFT

(11) **EP 4 784 945 B1**
(45) Veröffentlichungstag und Bekanntmachung des Hinweises auf die Patenterteilung: **02.12.2026**
(21) Anmeldenummer: 25708671.0
(22) Anmeldetag: 20.02.2025
(51) Int. Cl.: F21V 8/00, G02F 1/13

(54) **BELEUCHTUNGSEINRICHTUNG FÜR EINEN FREIEN UND EINEN EINGESCHRÄNKTEN SICHTMODUS UND BILDSCHIRM MIT EINER SOLCHEN BELEUCHTUNGSEINRICHTUNG**
LIGHTING DEVICE FOR A FREE VIEWING MODE AND A RESTRICTED VIEWING MODE, AND SCREEN COMPRISING SUCH A LIGHTING DEVICE
DISPOSITIF D'ÉCLAIRAGE POUR MODE DE VISUALISATION LIBRE ET MODE DE VISUALISATION RESTREINTE, ET ÉCRAN COMPRENANT UN TEL DISPOSITIF D'ÉCLAIRAGE

(30) Priorität: 23.02.2024 DE 102024105135
(43) Veröffentlichungstag der Anmeldung: 05.08.2026
(73) Patentinhaber: siOPTICA GmbH, 07745 Jena (DE)
(72) Erfinder: BOURGIN, Yannick, 07745 Jena (DE)
(74) Vertreter: Gleim Petri Patent- und Rechtsanwaltspartnerschaft mbB
(86) Internationale Anmeldenummer: PCT/EP2025/054547
(87) Internationale Veröffentlichungsnummer: WO 2025/176761

(56) Entgegenhaltungen:
- WO-A1-2022/207639
- WO-A1-2023/274541
- DE-B4- 102015 204 735
- US-A1- 2019 094 442
- US-A1- 2021 157 050

## Beschreibung

### Technisches Gebiet der Erfindung

In den letzten Jahren wurden große Fortschritte zur Verbreiterung des Sehwinkels bei LCDs erzielt. Allerdings gibt es oft Situationen, in denen dieser sehr große Sehbereich eines Bildschirms von Nachteil sein kann. Zunehmend werden auch Informationen auf mobilen Geräten wie Notebooks und Tablet-PCs verfügbar, wie Bankdaten oder andere, persönliche Angaben, und sensible Daten. Dem entsprechend brauchen die Menschen eine Kontrolle darüber, wer diese sensiblen Daten sehen darf; sie müssen wählen können zwischen einem weiten Betrachtungswinkel, um Informationen auf ihrem Display mit anderen zu teilen, z.B. beim Betrachten von Urlaubsfotos oder auch für Werbezwecke. Andererseits benötigen sie einen kleinen Betrachtungswinkel, wenn sie die Bildinformationen vertraulich behandeln wollen.

Eine ähnliche Problemstellung ergibt sich im Fahrzeugbau: Dort darf der Fahrer bei eingeschaltetem Motor nicht durch Bildinhalte, wie etwa digitale Entertainmentprogramme, abgelenkt werden, während der Beifahrer selbige jedoch auch während der Fahrt konsumieren möchte. Mithin wird ein Bildschirm benötigt, der zwischen den entsprechenden Darstellungsmodi umschalten kann.

Zusatzfolien, die auf Mikro-Lamellen basieren, wurden bereits für mobile Displays eingesetzt, um deren optischen Datenschutz zu erreichen. Allerdings waren diese Folien nicht (um)schaltbar, sie mussten immer erst per Hand aufgelegt und danach wieder entfernt werden. Auch muss man sie separat zum Display transportieren, wenn man sie nicht gerade braucht. Ein wesentlicher Nachteil des Einsatzes solcher Lamellen-Folien ist ferner mit den einhergehenden Lichtverlusten verbunden.

### Stand der Technik

Die WO 2022/207639 A1 offenbart eine gattungsgemäße Beleuchtungseinrichtung mit anisotropem Streuverhalten. Die Schrift US 5,956,107 A offenbart eine umschaltbare Lichtquelle, mit der eir Bildschirm in mehreren Modi betrieben werden kann. Nachteilig hierbei ist, dass sämtliche Lichtauskopplung auf Streuung beruht und damit nur geringe Effizienz sowie nichtoptimale Lichtrichtungseffekte erzielt werden. Insbesondere die Erzielung eines fokussierten Lichtkegels wird nicht näher offenbart.

In der CN 107734118 A ist ein Bildschirm beschrieben, der mittels zwei Hintergrundbeleuchtungen den Betrachtungswinkel eines Bildschirms kontrollierbar gestaltet. Die obere der beiden Hintergrundbeleuchtungen soll hierzu fokussiertes Licht aussenden. Als Ausgestaltung dazu wird insbesondere ein Gitter mit opaken und transparenten Abschnitten genannt. Selbiges führt jedoch mutmaßlich dazu, dass auch das Licht der zweiten Hintergrundbeleuchtung, welches die erste in Richtung eines LCD-Panels durchdringen muss, ebenfalls fokussiert wird und mithin der eigentlich für einen breiten Betrachtungswinkel vorgesehene öffentliche Betrachtungsmodus eine deutliche Winkelschmälerung erleidet.

Die US 2007/030240 A1 beschreibt ein optisches Element zur Kontrolle der Lichtausbreitungsrichtung von aus einer Hintergrundbeleuchtung herrührenden Lichtes. Dieses optische Element verlangt beispielsweise Flüssigkristalle in Form von PDLCs, was zum einen teuer, zum anderen aber insbesondere für Endkundenanwendungen sicherheitskritisch ist, da PDLC-Flüssigkristalle in der Regel Spannungen höher als 60V für Ihre Schaltung benötigen.

In der CN 1987606 A wird wiederum ein Bildschirm beschrieben, der mittels zwei Hintergrundbeleuchtungen den Betrachtungswinkel eines Bildschirms kontrollierbar gestaltet. Dabei kommt insbesondere ein "first light plate" zum Einsatz, welches keilförmig sein muss, um die beabsichtigte fokussierte Lichtauskopplung zu ermöglichen. Genaue Details zur Erzielung der fokussierten Lichtauskopplung mit entsprechenden Winkelbedingungen werden nicht offenbart.

Ferner beschreibt die US 2018/0267344 A1 einen Aufbau mit zwei flachen Beleuchtungsmodulen. Hierbei wird das Licht des in Betrachtungsrichtung hinten liegenden Beleuchtungsmodules durch eine separate Struktur fokussiert. Nach der Fokussierung muss das Licht noch das vordere Beleuchtungsmodul passieren, welches über Streuelemente verfügt. Somit ist eine starke Lichtfokussierung für einen Sichtschutz nicht optimal umsetzbar.

Schließlich offenbart die US 2007/0008456 A1 die Aufteilung eines Lichtabstrahlwinkels in mindestens 3 Bereiche, wobei in der Regel zwei Bereiche davon mit Licht beaufschlagt werden. Hieraus ergibt sich, dass ein Sichtschutz, bei dem ein so beleuchtetes Display verwendet wird, nicht allein aus einer Richtung betrachtbar sein kann.

Die WO 2015/121398 A1 der Anmelderin beschreibt einen Bildschirm der eingangs beschriebenen Art. Dort sind für die Umschaltung der Betriebsarten essentiell Streupartikel im Volumen des entsprechenden Lichtleiters vorhanden. Die dort gewählten Streupartikel aus einem Polymerisat weisen jedoch in der Regel den Nachteil auf, dass Licht aus beiden Großflächen ausgekoppelt wird, wodurch etwa die Hälfte des Nutzlichtes in die falsche Richtung, nämlich zur Hintergrundbeleuchtung hin, abgestrahlt und dort aufgrund des Aufbaus nicht in hinreichendem Umfang recycelt werden kann. Überdies können die im Volumen des Lichtleiters verteilten Streupartikel aus Polymerisat unter Umständen, insbesondere bei höherer Konzentration, zu Streueffekten führen, die den Sichtschutzeffekt in der geschützten Betriebsart vermindern.

Die US2020/012129 A1 offenbart eine Beleuchtungseinrichtung und einen Bildschirm, welche zwei Lichter für die Umschaltung zwischen einem schmalen und einem breiten Betrachtungsmodus beschreiben. Dabei wird zum einen einer der Lichtleiter mit Fasern ausgebildet. Zum anderen wird die streuende Auskoppelstruktur eines Lichtleiters in Projektionsrichtung auf bestimmte Streifen beschränkt. Dies ist für eine homogene Bildausleuchtung nachteilig und verursacht in der Regel auch ungewollte Moiré-Effekte im Aufbau, etwa im Zusammenspiel mit den Pixelspalten bzw. -zeilen eines darüber liegenden LCD-Panels.

Die WO 2012/042938 A1 (insbesondere in Fig. 14 A, B und Fig. 22 A, B) offenbart Auskoppelstrukturen mit genau einer Krümmungsrichtung in den Strukturen. Dies kann dazu führen, dass von ein- und demselben Punkt auf der Fläche eines Auskoppelelements aufgrund der Dispersion Licht unterschiedlicher Wellenlängen in unterschiedliche Richtungen ausgekoppelt wird. Weißlicht wird also unerwünscht aufgespalten. Dies wiederum kann oftmals störende visuelle "Regenbogeneffekte" erzeugen.

In der DE 10 2018 114 565 A1 wird eine Anzeigevorrichtung für die Präsentation monochromer Bilder offenbart. Die Verminderung von farblichen Artefakten wie etwa Regenbogenbildung wird in der DE 10 2018 114 565 A1 nicht behandelt. Vielmehr offenbart die DE 10 2018 114 565 A1 in Absatz [0125], dass in einer Vorrichtung gleichzeitig zwei unterschiedliche Anzeigen (4B und 5B) Licht unterschiedlicher Farbe emittieren. Eine Vermischung von Licht unterschiedlicher Wellenlängen, um beispielsweise störende Artefakte zu mindern, kann hier nicht erfolgen, weil sonst der hier erwünschte Effekt zweier unterschiedlicher Farben zunichte gemacht würde.

Den vorgenannten Verfahren und Anordnungen ist in der Regel der Nachteil gemein, dass sie die Helligkeit des Grundbildschirms deutlich reduzieren und / oder ein aktives, zumindest jedoch ein spezielles, optisches Element zur Modi-Umschaltung benötigen und / oder eine aufwändige sowie teure Herstellung erfordern und / oder die Auflösung im frei betrachtbaren Modus reduzieren und/oder optische Artefakte erzeugen.

### Beschreibung der Erfindung

Es ist daher Aufgabe der Erfindung, eine Beleuchtungseinrichtung zu beschreiben, durch welche in Zusammenwirkung mit einem Bildschirm eine sichere Darstellung von Informationen vermittels eines wahlweise eingeschränkten Betrachtungswinkels realisiert werden kann, wobei in einer weiteren Betriebsart eine freie, möglichst im Betrachtungswinkel uneingeschränkte Sicht möglich sein soll. Die Erfindung soll mit einfachen Mitteln möglichst preisgünstig umsetzbar sein. In beiden Betriebsarten soll eine möglichst hohe Auflösung, besonders bevorzugt die native Auflösung des verwendeten Bildschirms, sichtbar sein. Insbesondere sollen durch die Lösung visuell wahrnehmbare Artefakte wie etwa Farbeffekte, z.B. Regenbogeneffekte, vermindert oder ganz verhindert werden. Ferner soll ein Bildschirm angegeben werden, der eine entsprechende Beleuchtungseinrichtung nutzt.

Diese Aufgabe wird erfindungsgemäß gelöst von einer Beleuchtungseinrichtung für einen Bildschirm, die in mindestens zwei Betriebsarten B1 für einen freien Sichtmodus und B2 für einen eingeschränkten Sichtmodus, in welchem Licht von der Beleuchtungseinrichtung in einem gegenüber dem freien Sichtmodus eingeschränkten Winkelbereich abgestrahlt wird, betrieben werden kann, umfassend
- eine flächenartig ausgedehnte Hintergrundbeleuchtung, die Licht in den eingeschränkten Winkelbereich abstrahlt,
- einen in Betrachtungsrichtung vor der Hintergrundbeleuchtung gelegenen plattenförmigen Lichtleiter mit zwei Großflächen und Schmalseiten, die die Großflächen an deren Kanten verbinden, wobei
   - der Lichtleiter auf mindestens einer der Großflächen und / oder innerhalb seines Volumens Auskoppelelemente aufweist,
   - jedes Auskoppelelement mindestens eine Funktionsfläche zur definierten Auskopplung von Licht aufweist, an der Licht aus dem Lichtleiter ausgekoppelt wird,
- seitlich an mindestens einer Schmalseite des Lichtleiters (einer Einkoppelseite) angeordnete Leuchtmittel,
- wobei in der Betriebsart B2 die Hintergrundbeleuchtung ein- und die Leuchtmittel ausgeschaltet sind, und wobei in der Betriebsart B1 mindestens die Leuchtmittel eingeschaltet sind,
- und wobei für mindestens zwei Prozent (alternativ mindestens vier Prozent, mindestens zehn Prozent, bevorzugt mehr als zwanzig Prozent oder hundert Prozent) der Auskoppelelemente gilt, dass die Funktionsfläche zur definierten Auskopplung von Licht in mindestens zwei Richtungen eine Krümmung aufweist, wobei sich die beiden Formen der Krümmungen der jeweiligen Funktionsfläche (5) in den mindestens zwei Richtungen unterscheiden, wodurch von den Leuchtmitteln herrührendes und an mindestens einer der Schmalseiten in den Lichtleiter eingekoppeltes Licht verschiedener Wellenlängen auf dem jeweiligen Lichtweg innerhalb des Lichtleiters bis zum jeweiligen Ort der Auskopplung des Lichtes gemischt wird, wodurch visuell wahrnehmbare Farbeffekte, z.B. sogenannte Regenbogeneffekte, minimiert oder ganz unterdrückt werden.

Durch die erfindungsgemäße Ausgestaltung findet vorteilhaft eine stärkere Mischung der in Weißlicht enthaltenen Wellenlängen statt, verglichen mit der im Stand der Technik üblichen Krümmung der Funktionsflächen der Auskoppelelemente nur in einer Richtung. Auf diese neue Art und Weise werden im ausgekoppelten Licht visuell wahrnehmbare Farbeffekte minimiert oder ganz unterdrückt. Im Stand der Technik ist es bekannt, eine Krümmung der Funktionsflächen der Auskoppelelemente nur in einer Richtung vorzunehmen, und dabei optional den Anstellwinkel ggf. zu variieren, wie in der WO 2023/274541 A1 beschrieben ist. Allerdings können damit Farbvariationen, die sich aus unterschiedlichen Auskopplungswinkeln an den Funktionsflächen der Auskoppelelemente für unterschiedliche Wellenlängen ergeben, nur in gewissen Grenzen kompensiert werden. Oftmals ergeben sich im Stand der Technik bei dreidimensionalen, nichtstreuenden Auskoppelelementen mit einer Funktionsfläche, die nur in einer Richtung eine Krümmung aufweisen, wahrnehmbare Regenbogeneffekte aufgrund lokal -unbeabsichtigt- gehäuft ausgekoppelter Wellenlängenbereiche. Die Erfindung bietet hier eine deutliche Verbesserung aufgrund der Krümmung der Funktionsflächen der Auskoppelelemente in mindestens zwei Richtungen: Die zusätzliche Krümmung sorgt für eine stärkere Durchmischung der unterschiedlichen Farbanteile des ausgekoppelten Lichtes, was vor allem für Weißlicht wichtig ist, um nicht örtlich-spektral aufgelöste Maxima hervorzurufen, die z.B. als unerwünschte Farb- oder Regenbogeneffekte wahrgenommen werden können.

Vorteilhaft sind die Leuchtmittel an mindestens einer der Schmalseiten des Lichters angeordnet, wobei sich diese Einkoppelseite bzw. diese Einkoppelseiten aus Sicht eines sitzenden oder stehenden Betrachters oben, unten, links und/oder rechts vom Lichtleiter befinden kann bzw. können.

Für besondere Ausgestaltungen kann gelten, dass nur Auskoppelelemente eine Krümmung ihrer Funktionsflächen in mindestens zwei Richtungen aufweisen, welche sich innerhalb des ersten Drittels des Volumens bzw. auf dem ersten Drittel einer Großfläche des Lichtleiters vor der Lichteinkoppelseite befinden. Das genannte Drittel kann ggf. auch einen anderen Wert annehmen, etwa ein Viertel oder die Hälfte oder andere Werte. Außerhalb des vorgenannten Bereiches können die Funktionsflächen der Auskoppelelemente ggf. eine Krümmung in nur einer Richtung aufweisen.

Im Allgemeinen können die Auskoppelelemente eine dreidimensionale Form mit einer maximalen Ausdehnung in ihrer größten Dimension, die kleiner als 100 Mikrometer, bevorzugt kleiner als 50 Mikrometer, ist, aufweisen. Insbesondere ist es möglich, dass die Auskoppelelemente die Form von Prismatoiden, Scutoiden, zu diesen verwandten Körpern und/oder konvexen Körpern aufweisen. Andere Ausgestaltungen sind explizit möglich.

Erfindungsgemäß wird eine Beleuchtungseinrichtung derart ausgestaltet, dass die Auskoppelemente jeweils eine Funktionsfläche zur definierten Auskopplung von Licht mit einer jeweiligen Krümmung in mindestens zwei Richtungen aufweisen, wobei sich die beiden Formen der Krümmungen der jeweiligen Funktionsfläche in den mindestens zwei Richtungen unterscheiden.

Beispielhaft -und nicht ausschließlich- kann die jeweilige Krümmung der Funktionsflächen der Auskoppelemente in einer ersten Richtung und in einer dazu senkrechten, zweiten Richtung jeweils - bis auf eine festlegbare Toleranz - kreisförmig, elliptisch, exponentiell oder bezierkurvenförmig sein. Andere Ausgestaltungen sind explizit möglich.

Ferner kann es für die bessere Produzierbarkeit, aber auch zur weiteren Verbesserung der optischen Eigenschaften einer Beleuchtungseinrichtung, hilfreich sein, wenn jeweils mindestens eine weitere Fläche mindestens eines Teiles der Auskoppelemente, die jeweils nicht der jeweiligen Funktionsfläche entspricht, eine Krümmung in mindestens eine oder zwei Richtungen aufweist. Hierbei kann es sich beispielsweise um Entformungsschrägen (z.B. für Spritzguss- oder Nano-Imprint-Verfahren) handeln, die mittels solcher Oberflächen der Auskoppelemente, die nicht der jeweiligen Funktionsfläche entsprechen, umgesetzt werden.

Weiterhin können die Auskoppelemente als Vertiefungen oder Erhöhungen auf einer der (oder beiden) Großflächen des Lichtleiters ausgebildet sein, wobei auf ein- und demselben Lichtleiter bzw. mindestens einer seiner Großflächen auch Vertiefungen und Erhöhungen vorhanden sein können. Bevorzugt jedoch werden die Auskoppelemente als Vertiefungen auf einer der Großflächen des Lichtleiters ausgebildet. Es ist außerdem möglich, dass Auskoppelelemente auf beiden Großflächen und / oder zusätzlich optional im Volumen angebracht sind.

Ferner ist es für die Anwendung von Vorteil, wenn der Lichtleiter in einer wählbaren Richtung ein stärkeres Streuverhalten aufweist als in einer dazu senkrechten Richtung. Vorzugsweise entspricht diese wählbare Richtung beim Blick eines (stehenden oder sitzenden ) Betrachters auf die Beleuchtungseinrichtung der vertikalen Richtung, so dass das Streuverhalten des Lichtleiters in der vertikalen Richtung größer ist als in der horizontalen Richtung, wobei die horizontale Richtung parallel zu einer Linie zwischen den Augen des besagten Betrachters verläuft.

Entsprechend kann also die Hintergrundbeleuchtung grundsätzlich aufgebaut sein wie ein LED-Backlight, beispielsweise als sogenanntes Direct-lit LED Backlight, edge LED Backlight, OLED oder als ein anderer Flächenstrahler, auf welchen z.B. mindestens ein permanenter Privacy-Filter (z.B. mit Mikrolamellen oder aber polarisationssensitiv) aufgebracht ist.

Die beiden Betriebsarten B1 und B2 unterscheiden sich schließlich dadurch, dass in der Betriebsart B2 die Hintergrundbeleuchtung ein- und die Leuchtmittel (an der Einkoppelseite des Lichtleiters) ausgeschaltet sind, und wobei in der Betriebsart B1 mindestens die Leuchtmittel (an der Einkoppelseite des Lichtleiters) -und optional auch die Leuchtmittel- eingeschaltet sind. Dabei wird nur Licht berücksichtigt, was ursprünglich von den Leuchtmitteln in den Lichtleiter eingestrahlt und von diesem anschließend wieder über die Auskoppelelemente abgestrahlt wurde, wobei die Abstrahlung nahezu ausschließlich über die Auskoppelemente erfolgt.

Der Lichtleiter besteht vorzugsweise aus einem transparenten, thermoplastischen oder thermoelastischen Polymer, z.B. Kunststoff, oder aus Glas. Beispielsweise kann der Lichtleiter bzw. sein Substrat mindestens 40 Gewichtsprozent Polymethylmethacrylat, bevorzugt mindestens 60 Gewichtsprozent Polymethylmethacrylat, bezogen auf sein Gewicht, umfassen. Alternativ kann es sich beispielsweise um Polycarbonat (PC) handeln.

Weiterhin ist es möglich, gegebenenfalls auftretende optische Artefakte, die zum Beispiel von der Herstellung des Lichtleiters bzw. dessen Auskoppelstrukturen herrühren, mittels eines anisotropischen Diffusors, der sich in Betrachtungsrichtung eines Betrachters vor dem Lichtleiter befindet, abzuschwächen. Dieser sollte, gemäß der vorbeschriebenen Definition der Richtungen, möglichst in der horizontalen Richtung deutlich weniger streuen als in der vertikalen Richtung, um in der Betriebsart B2 für einen eingeschränkten Sichtmodus Licht horizontal möglichst nur geringfügig oder im besten Falle gar nicht zu streuen.

Als eingeschränkter Winkelbereich kann grundsätzlich jeder Bereich in Frage kommen, der kleiner als der Halbraum vor der Hintergrundbeleuchtung ist; bevorzugt ist hier aber z.B. ein Winkelbereich von +/-20°oder +/-30° horizontal und/oder vertikal oder als Konus um die Flächennormale bzw. einen wählbaren Richtungsvektor auf der Hintergrundbeleuchtung gemeint; kleine Lichtmengen von weniger als 1% bis 5% der Maximal-Helligkeit können bei der Definition des eingeschränkten Winkelbereichs außer Betracht bleiben.

Die Beleuchtungseinrichtung kann zusätzlich noch einen Kollimationsfilm an einer geeigneten Stelle im Aufbau enthalten, beispielsweise ein Linsen- oder Prismenraster ober- oder unterhalb des plattenförmigen Lichtleiters.

Wichtig für die Ausgestaltung der Erfindung ist, dass das gezielte Auskoppeln von Licht aus dem Lichtleiter nicht durch Streuung, wie bei den meisten handelsüblichen Lichtleitern üblich, erfolgt. Für die Auskopplung mittels die Lichtleiteroberfläche sozusagen verletzenden Streuelementen im Stand der Technik wäre die Erfindung wirkungslos, da die Auskopplung des Lichts in diesem Fall nicht definiert bzw. deterministisch, sondern primär diffus erfolgt. Weiterhin hätte die Auskopplung mittels Streuelementen die negative Folge, dass der Lichtleiter auch für ihn durch die Großflächen durchdringendes Licht stark streuend wirkt, was insbesondere für seinen Einsatz in Privacy-Anwendungen (als für die Betriebsart B2) ein Ausschlusskriterium darstellt. Es lässt sich also festhalten, dass im Rahmen der Erfindung keine Lichtleiter umfasst sind, deren primärer Ansatz für das Auskoppeln von Licht das Prinzip der Streuung ist. Aus diesem Grund sind insbesondere dreidimensionale Strukturelemente zu bevorzugen, weil diese -bis auf nicht eine vermeidbare Streuung im Rahmen einer vorgebbaren Toleranz- eine deterministische Auskopplung von Licht ermöglichen. Allgemein soll die Streuung des den Lichtleiter durchdringenden Lichts möglichst gering sein, wie in den folgenden beiden Abschnitten beschrieben wird.

Die Auskoppelelemente können bei der Herstellung des Lichtleiters entsprechend anpassbaren und vorgebbaren Bedingungen für die Auskopplung des Lichts grundsätzlich auf verschiedene Weise in oder auf dem Lichtleiter verteilt werden. Bei den Auskoppelelementen handelt es sich um lokal begrenzte Strukturänderungen im Volumen oder/und auf den Oberflächen des Lichtleiters. Ausdrücklich nicht unter den Begriff des Auskoppelelements fallen daher zusätzliche optische Schichten, die auf den Flächen des Lichtleiters angebracht werden, d.h. z.B. Diffusionsschichten, Reflexionsschichten, (duale) helligkeitsverstärkende, kollimierende (*brightness enhancement film - BEF*) oder auch polarisationsrecycelnde Schichten, wie beispielweise polarisationsselektive Braggspiegel (*(dual) brightness enhancement film - (D)BEF)* oder Drahtgitterpolarisatoren. Diese, nicht unter den Begriff des "Auskoppelelements" fallenden zusätzlichen Schichten werden -wenn überhaupt- mit dem Lichtleiter nur an den Rändern verbunden, liegen im Bereich der Großflächen meistens jedoch nur lose auf und bilden mit dem Lichtleiter keine physische Einheit. Hingegen bilden auf die Großflächen aufgebrachte Lacke, die sich mit dem Lichtleiter durch chemische Reaktionen oder andere Kräfte (z.B. van der Waals-Kräfte) verbinden, eine physische Einheit, sind nicht mehr voneinander zu trennen; solche Lacke zählen daher nicht als zusätzliche Schicht im oben genannten Sinne.

Die Auskoppelelemente sind in ihrer Anzahl pro Fläche und in ihrer Ausdehnung derart gewählt, dass der Lichtleiter auf mindestens 50%, bevorzugt auf 80% seiner Fläche, besonders bevorzugt auf seiner ganze Fläche einen durchschnittlichen Haze-Wert kleiner als 20% aufweist, bevorzugt kleiner als 15%, besonders bevorzugt kleiner als 10%, gemessen gemäß ASTM D1003 - wobei hier die Messung gemäß der gebräuchlicheren Prozedur A mit einem Hazemeter als Referenz zugrunde gelegt wird. Dadurch wird Licht, welches den Lichtleiter durch seine Großflächen durchdringt, höchstens geringfügig gestreut wird. Unter "geringfügig" ist beispielsweise zu verstehen, dass (aufgrund des geringen Haze-Wertes) in einem Winkelbereich von beispielsweise horizontal +/-40° von der Flächennormalen maximal 1% bis 5% der Leuchtdichte durch Streuung des Lichtleiters aus Licht hinzukommt, welches in einem senkrechten Winkel über eine Großfläche in den Lichtleiter eingestrahlt wird. Handelsübliche Lichtleiter, die die Streuung als primären Mechanismus zur Auskopplung nutzen, erreichen typischerweise nicht die vorgenannten Haze-Werte.

Alternativ ist es möglich, dass die Auskoppelelemente in ihrer Anzahl pro Fläche und in ihrer Ausdehnung derart gewählt sind, dass der Lichtleiter auf mindestens 80% seiner Fläche höchstens 25 Prozent, bevorzugt jedoch höchstens zehn Prozent des ihn durch seine Großflächen durchdringenden Lichtes um mehr als zehn Grad (bevorzugt nur 7°, besonders bevorzugt lediglich 5°) streut. Handelsübliche Lichtleiter, die die Streuung als primären Mechanismus zur Auskopplung nutzen, erreichen typischerweise nicht die vorgenannten maximalen Streuwerte.

In einer weiteren Ausgestaltung kann die Großfläche des Lichtleiters, aus der das Licht austritt, in Teilbereiche vorgegebener Größe eingeteilt und das Verhältnis der (aufsummierten) Flächeninhalte der Funktionsflächen in einem Teilbereich zum Flächeninhalt des jeweiligen Teilbereichs für verschiedene Teilbereiche unterschiedlich sein, so dass das Streuverhalten des Lichtleiters über die Großfläche, aus der das Licht austritt, variiert. Dabei ist zu beachten, dass diejenige Großfläche, aus der das Licht tritt, nicht unbedingt derjenigen Großfläche entsprechen muss, auf welcher sich die Auskoppelelemente befinden. Vielmehr kann beispielsweise eine Großfläche die Auskoppelelemente als zum Volumen des Lichtleiters gerichtete Auskoppelelemente aufweisen, welche dann das eingekoppelte Licht umlenken und somit auskoppeln, wobei dermaßen ausgekoppelte Lichtstrahlen jedoch zunächst noch das Volumen des Lichtleiters bzw. Teile davon durchqueren, um dann an der anderen Großfläche den Lichtleiter zu verlassen. Generell wird das Streuverhalten der Auskoppelemente insbesondere durch deren Form und Größe, besonders aber deren Funktionsfläche definiert, was beim optischen Design berücksichtigt wird.

Die Hintergrundbeleuchtung besteht beispielsweise aus einem flächigen Strahler, vorzugsweise einem weiteren Lichtleiter mit seitlich oder auf der Rückseite angeordneten weiteren Leuchtmitteln, sowie mindestens einem in den flächigen Strahler integrierten und / oder davor angeordneten Lichtkollimator, wie beispielsweise mindestens einer Prismenfolie und / oder mindestens einem Privacyfilter (Lamellenfilter). Alternativ kann anstelle eines Lamellenfilters auch ein optisches Element mit Absorptionsdipolmomenten, deren Mehrzahl mit einer Toleranz von maximal 20° zur Senkrechten auf der Oberfläche des optischen Elements ausgerichtet sind, zum Einsatz kommen, um die Lichtrichtung im Zusammenspiel mit einem linearen Polarisationsfilter, beispielsweise einem rückseitigen Polarisationsfilter eines mit der Beleuchtungseinrichtung verwendeten LCD-Panels, zu beschränken. Außerdem kann eine sogenannte fokussierte Backlight-Einheit als Hintergrundbeleuchtung zum Einsatz kommen, bei welcher Licht aus einem (anderen) Lichtleiter bereits in einen eingeschränkten Winkelbereich ausgekoppelt und ggf. noch gerichtet, umgelenkt bzw. überformt wird.

Die Auskoppelemente selbst können aber auch beispielsweise als Hohlräume ausgestaltet werden, die im Volumen des Lichtleiters ausgebildet sind. Die Hohlräume können luftleer sein, sind aber bevorzugt mit einem gasförmigen, flüssigen oder festen Material ausgefüllt, Das Material weist einen Brechungsindex auf, der von dem des für den Lichtleiter verwendeten Materials abweicht; bevorzugt ist er geringer. Durch die Befüllung mit Material und durch die Materialwahl kann man Einfluss auf die Lichtleitung bzw. -auskopplung nehmen. Alternativ oder ergänzend weicht auch der Haze-Wert des Materials bevorzugt von demjenigen des für den Lichtleiter verwendeten Materials ab, ist bevorzugt höher. Vorteile dieser Ausgestaltungen sind höhere Effizienz bei der Lichtauskopplung.

Alternativ und technisch einfacher können die Hohlräume auch gebildet werden, wenn man den Lichtleiter aus zwei miteinander verbundenen Substratschichten bildet, die Substratschichten sind bevorzugt gleichartig. Die Verbindung kann chemisch, physikalisch oder durch Kleben erfolgen. Die Hohlräume sind dann als Materialaussparungen an mindestens einer der Grenzflächen der Substratschichten ausgebildet.

Wenn die Auskoppelelemente auf mindestens einer der Großflächen des Lichtleiters angebracht sind, so werden diese vorteilhaft aus einem mit einem Werkzeug strukturierten Kunststoff oder Glas gebildet, dessen Struktur vermittels eines Werkzeuges eingeprägt wurde. Dies ist z.B. in Massenproduktion möglich, indem auf ein Lichtleitersubstrat ein UV-härtendes Material - z.B. ein Lack, ein Monomer etc. - aufgebracht wird, welches vermittels eines Werkzeuges strukturiert und durch UV-Strahlung ausgehärtet, z.B. polymerisiert wird. Andere durch Strahlung härtende Materialien können ebenfalls eingesetzt werden. Die Ausbildung der Aussparungen zur Realisierung der Auskoppelelemente lässt sich beispielsweise mechanisch, lithographisch oder drucktechnisch realisieren, oder aber auch materialauftragend, -umwandelnd, -abtragend oder -auflösend. Insbesondere können Varianten des Spritzgusses (variotherm/isotherm, Spritzprägen/Spritzguss) unter Zuhilfenahme entsprechender Struktureinsätze zur Anwendung kommen (siehe hierzu auch die DE102020134055 B4 der Anmelderin).

Damit können dreidimensionale Strukturelemente - entweder konvex mit Kunststoffanteil auf der Oberfläche nach außen zeigend, und / oder konkav als Einprägung bzw. Aussparung innerhalb der Oberflächenschicht des strukturierten Kunststoffs kostengünstig und mit Massenfertigungstauglichkeit umgesetzt werden. Konkav ausgebildete und konvex ausgebildete Strukturen können gleichermaßen zum Einsatz kommen.

Die Struktur der Auskoppelelemente wird wie oben beschrieben nach den genannten Kriterien vorgegeben, wobei die Wirkung eines jeden Auskoppelelements zumindest näherungsweise bekannt ist und Eigenschaften des Lichtleiters bzw. des aus dem Lichtleiter tretenden Lichts gezielt durch eine vorgebbare Struktur und Verteilung der Auskoppelelemente festgelegt werden können, wobei es insbesondere auf das Verhältnis der Summe der Flächeninhalte der Funktionsflächen zum Flächeninhalt der Gesamtfläche der Großfläche, aus der Licht ausgekoppelt wird, sowie die Formen der Funktionsflächen ankommt.

Die geforderten, für die Erfindung wesentlichen Eigenschaften für die Auskoppelelemente hinsichtlich ihrer Anzahl pro Flächeneinheit, ihrer Form einschließlich der Funktionsfläche, ihrer Ausrichtung und Ausdehnung in drei Dimensionen sowie ihrer Verteilung auf mindestens einer der Großflächen und / oder innerhalb des Volumens des Lichtleiters können beispielsweise mit einer Optik-Simulationssoftware wie etwa "Light-Tools" der Firma Synopsis oder anderer Anbieter bestimmt und dann entsprechend physisch umgesetzt werden.

Vorteilhaft ist die Verteilung der Auskoppelelemente auf mindestens einer der Großflächen und / oder innerhalb des Volumens des Lichtleiters so vorgegeben, dass das ausgekoppelte Licht auf mindestens 50% (bevorzugt 95% oder 100%) des gesamten (lichtauskoppelnden Bereiches des) Lichtleiters eine Leuchtdichtehomogenität (insbesondere bezüglich Weißlicht) von mindestens 50%, bevorzugt mindestens 60% erreicht. Die Leuchtdichtehomogenität kann hierzu als L_{V}^{min}/L_{V}^{max} definiert werden, also als Verhältnis des kleinsten Wertes der Leuchtdichte zum größten Wert einer betrachteten Fläche (sogenannter "Area Scan"-Ansatz, bei dem jeder ermittelte Wert auf der betrachteten Fläche in die Auswertung eingeht).

Weiterhin umfasst die Erfindung einen erfindungsgemäßen Bildschirm, der in mindestens zwei Betriebsarten B1 für einen freien Sichtmodus und B2 für einen eingeschränkten Sichtmodus, in welchem Licht von der Beleuchtungseinrichtung in einem gegenüber dem freien Sichtmodus eingeschränkten Winkelbereich abgestrahlt wird, betrieben werden kann, umfassend
- eine Beleuchtungseinrichtung wie vorstehend beschrieben,
- in Betrachtungsrichtung vor der Beleuchtungseinrichtung einen transmissiven Bildgeber, vorzugsweise ein LCD-Panel.

Ferner ist es für einige Anwendungen vorteilhaft, wenn der besagte eingeschränkte Winkelbereich asymmetrisch um die Flächennormale der Hintergrundbeleuchtung ausgebildet ist. Die asymmetrische Ausbildung erfolgt bevorzugt in einer der Vorzugsrichtungen. Dies ist insbesondere bei Anwendungen im Fahrzeug hilfreich, etwa wenn ein mit der erfindungsgemäßen Beleuchtungseinrichtung zu kombinierender Bildschirm als sogenanntes Center-Information-Display im Armaturenbrett etwa in der Mitte zwischen Fahrer und Beifahrer angeordnet ist. Dann muss der in der Betriebsart B2 ausschließlich für den Beifahrer freigegebene, eingeschränkte Winkelbereich für die Sicht asymmetrisch gestaltet, also auf den Beifahrer gerichtet, sein. Die Vorzugsrichtung, in welcher die Asymmetrie ausgebildet ist, entspricht hier der Horizontalen.

Besonders vorteilhaft findet die erfindungsgemäße Beleuchtungseinrichtung mit einem Bildschirm Verwendung in einem Fahrzeug zur wahlweisen Darstellung von Bildinhalten lediglich für den Beifahrer in der Betriebsart B2 bzw. gleichzeitig für den Fahrer und den Beifahrer in der Betriebsart B1. Ersteres ist z.B. hilfreich, wenn der Beifahrer sich Unterhaltungsinhalte anschaut, die den Fahrer ablenken könnten.

Andere Varianten sind denkbar und liegen im Rahmen der Erfindung. Vorteilhaft ist der Lichtleiter für ihn durch seine Großflächen durchdringendes Licht zu mindestens 50% transparent. Bei den Leuchtmitteln kann es sich beispielsweise um LEDs (bevorzugt) bzw. LED-Zeilen oder Laserdioden handeln, deren Abstrahlfläche besonders bevorzugt wenigstens annähernd rechteckig ist. Andere Varianten sind denkbar und liegen im Rahmen der Erfindung.

Weiterhin können die gewünschten eingeschränkten Winkelbereiche für den Modus B2 für eine eingeschränkte Sicht jeweils für die horizontale und vertikale Richtung unabhängig voneinander definiert und umgesetzt werden. Beispielsweise könnte in der vertikalen Richtung ein größerer Winkel (oder ggf. gar keine Einschränkung) sinnvoll sein, als in der horizontalen Richtung, etwa wenn bei Geldautomaten Personen mit unterschiedlicher Größe ein Bild sehen sollen, während der Seiteneinblick stark oder komplett eingeschränkt bleiben soll. Für POS-Zahlterminals sind hingegen auf Grund von Sicherheitsbestimmungen oftmals Sichteinschränkungen im Modus B2 sowohl in horizontaler als in vertikaler Richtung notwendig.

Eine erfindungsgemäße Beleuchtungseinrichtung mit einem Bildschirm kann gleichsam verwendet werden zur Eingabe oder Anzeige von vertraulichen Daten, beispielweise von PIN-Geheimnummern, E-Mails, SMS oder Passwörtern, an Geldautomaten, Zahlungsterminals oder mobilen Geräten.

Grundsätzlich bleibt die Leistungsfähigkeit der Erfindung erhalten, wenn die vorbeschriebenen Parameter in bestimmten Grenzen variiert werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Außerdem ist keine der Zeichnungen maßstäblich. Es zeigen:
Fig. 1 eine Prinzipskizze zur einer Beleuchtungseinrichtung mit einem transmissiven Bildgeber,
Fig.2 eine zweidimensionale Prinzipskizze als Draufsicht auf beispielhafte Auskoppelemente,
Fig.3 einen im Querschnitt und als Prinzipskizze dargestellten Lichtleiter mit Auskoppelelementen im Stand der Technik, sowie
Fig.4 einen im Querschnitt und als Prinzipskizze dargestellten Lichtleiter mit Auskoppelelementen, deren Funktionsflächen zur definierten Auskopplung von Licht eine Krümmung in mindestens zwei Richtungen aufweist.

### Ausführliche Beschreibung der Zeichnungen

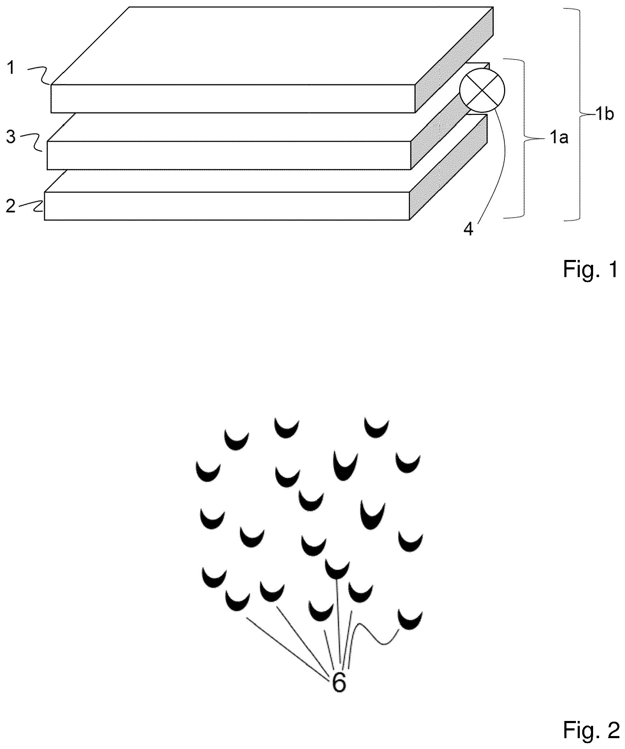

Die Fig.1 zeigt eine Prinzipskizze zur einer Beleuchtungseinrichtung 1a für einen Bildschirm 1b, die in mindestens zwei Betriebsarten B1 für einen freien Sichtmodus und B2 für einen eingeschränkten Sichtmodus, in welchem Licht von der Beleuchtungseinrichtung in einem gegenüber dem freien Sichtmodus eingeschränkten Winkelbereich abgestrahlt wird, betrieben werden kann, umfassend
- eine flächenartig ausgedehnte Hintergrundbeleuchtung 2, die Licht in den eingeschränkten Winkelbereich abstrahlt,
- einen in Betrachtungsrichtung vor der Hintergrundbeleuchtung 2 gelegenen plattenförmigen Lichtleiter 3 mit zwei Großflächen und Schmalseiten, die die Großflächen an deren Kanten verbinden, wobei
   - der Lichtleiter 3 auf mindestens einer der Großflächen und / oder innerhalb seines Volumens Auskoppelelemente 6 (die Auskoppelelemente 6 sind in Fig.1 nicht eingezeichnet) aufweist,
   - jedes Auskoppelelement 6 mindestens eine Funktionsfläche 5 (die Funktionsflächen sind in Fig.1 ebenfalls nicht eingezeichnet) zur definierten Auskopplung von Licht aufweist, an der Licht aus dem Lichtleiter 3 ausgekoppelt wird,
- seitlich an mindestens einer Schmalseite des Lichtleiters 3 (einer Einkoppelseite) angeordnete Leuchtmittel 4,
- wobei in der Betriebsart B2 die Hintergrundbeleuchtung 2 ein- und die Leuchtmittel 4 ausgeschaltet sind, und wobei in der Betriebsart B1 mindestens die Leuchtmittel 4 eingeschaltet sind,
- und wobei für mindestens zwei Prozent (alternativ mindestens vier Prozent, mindestens zehn Prozent, mehr als zwanzig Prozent oder hundert Prozent) der Auskoppelelemente 6 gilt, dass die Funktionsfläche 5 zur definierten Auskopplung von Licht in mindestens zwei Richtungen eine Krümmung aufweist, wobei sich die beiden Formen der Krümmungen der jeweiligen Funktionsfläche (5) in den mindestens zwei Richtungen unterscheiden, wodurch von den Leuchtmitteln 4 herrührendes und an mindestens einer der Schmalseiten in den Lichtleiter 3 eingekoppeltes Licht verschiedener Wellenlängen auf dem jeweiligen Lichtweg innerhalb des Lichtleiters 3 bis zum jeweiligen Ort der Auskopplung des Lichtes gemischt wird, wodurch visuell wahrnehmbare Farbeffekte, z.B. sogenannte Regenbogeneffekte, minimiert oder ganz unterdrückt werden.

Ferner gibt Fig.2 eine zweidimensionale, stilisierte Prinzipskizze als Draufsicht auf beispielhafte Auskoppelemente wieder. Deren Funktionsflächen 5 (in Fig. 2 nicht eingezeichnet) können sich jeweils an der konvexen oder konkaven Seite befinden, wobei ersichtlich ist, dass diese Funktionsflächen aus diesem Blick- bzw. Projektionswinkel in Draufsicht eine erste Krümmung aufweisen. Im Allgemeinen können die Auskoppelelemente 6 eine dreidimensionale Form mit einer maximalen Ausdehnung in ihrer größten Dimension, die kleiner als 100 Mikrometer, bevorzugt kleiner als 50 Mikrometer, ist, aufweisen. Insbesondere ist es möglich, dass die Auskoppelelemente 6, wie hier gezeigt, die Form von (gebogenen) Prismatoiden, (gebogenen) Scutoiden, zu diesen verwandten Körpern und/oder anderen konvexen Körpern aufweisen.

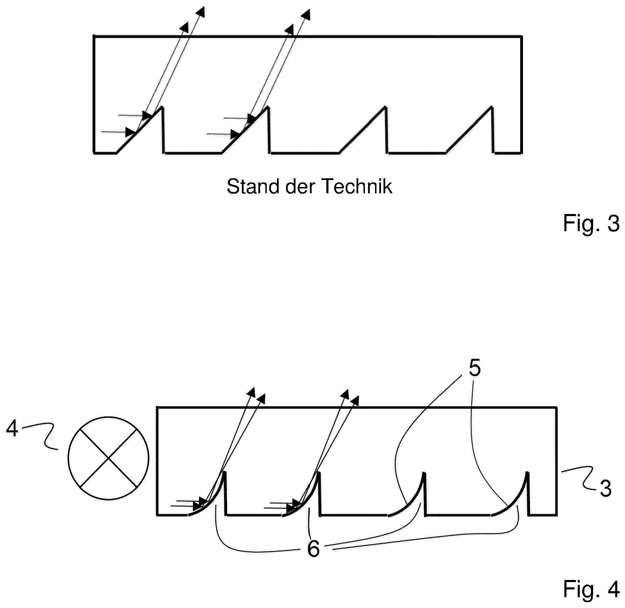

Weiterhin stellt die Fig.3 einen Lichtleiter mit Auskoppelelementen im Stand der Technik dar. Die Auskoppelelemente, welche hier im Verhältnis zur Dicke des Lichtleiters (welche z.B. wenige 100µm bis einige Millimeter betragen kann) deutlich übertrieben groß dargestellt sind, weisen Funktionsflächen auf, die per Design keine Krümmung in dieser Schnittansicht besitzen, mithin also insgesamt nur eine Krümmung in (höchstens) einer Richtung aufweisen. Bei den beiden linken Auskoppelelementen ist schematisch dargestellt, was mit zwei in etwa parallel durch Totalreflexion auf die beiden Auskoppelelemente geleiteten Lichtstrahlen aufgrund der Auskopplung mittels der Funktionsflächen geschieht: Beide werden in etwa parallel ausgekoppelt. Dies wiederum bedeutet, dass bei derartigen Funktionsflächen im Stand der Technik bei dreidimensionalen, nichtstreuenden Auskoppelelementen mit einer Funktionsfläche, die nur in einer Richtung eine Krümmung aufweisen, wahrnehmbare Regenbogeneffekte aufgrund lokal -unbeabsichtigt- gehäuft ausgekoppelter Wellenlängenbereiche auftreten können, denn aus parallel einfallenden Strahlen werden aufgrund der Wellenlängenabhängigkeit der Brechzahl -wie bei einem Prisma- farblich aufgefächerte Strahlen. Diese wiederum führen zu den genannten lokal gehäuft ausgekoppelten Wellenlängenbereichen, die wiederum z.B. als Regenbogeneffekte sichtbar sein können.

Demgegenüber zeigt Fig.4 einen Lichtleiter 3 mit Auskoppelelementen 6, deren Funktionsflächen 5 zur definierten Auskopplung von Licht eine Krümmung in mindestens zwei Richtungen aufweist. Ähnlich wie in Fig.3 sind auch hier die Auskoppelelemente 6 im Verhältnis zur Dicke des Lichtleiters 3 (welche z.B. wenige 100µm bis einige Millimeter betragen kann) deutlich übertrieben groß dargestellt. Zur besseren Übersichtlichkeit sind in Fig.4 nur zwei der vier Funktionsflächen 5 der vier gezeigten Auskoppelemente 6 mit "5" bezeichnet. Bei den beiden linken Auskoppelelementen 6 ist schematisch dargestellt, was mit zwei in etwa parallel auf die beiden Auskoppelelemente 6 geleiteten Lichtstrahlen aufgrund der Auskopplung mittels der Funktionsflächen 5 geschieht: Beide werden aufgrund der auch in dieser Draufsicht (einer zweiten Richtung entsprechend) vorhandenen Krümmung nicht mehr in etwa parallel ausgekoppelt. Vielmehr bedingt das Vorhandensein von Krümmungen der Funktionsflächen 5 in zwei Richtungen eine gegenüber dem Stand der Technik stärkere Lichtdurchmischung, gerade auch im Hinblick auf unterschiedliche Wellenlängen.

Es ist anzumerken, dass ungeachtet der wenigen in Fig.3 und Fig.4 gezeigten Lichtstrahlen in der Realität eine sehr große Anzahl an verschiedenen Lichtstrahlen vorhanden ist.

Durch die erfindungsgemäße Ausgestaltung eines Lichtleiters 3, wie in Fig.4 als Prinzipskizze gezeigt, findet also vorteilhaft eine stärkere Mischung der in Weißlicht enthaltenen Wellenlängen statt, verglichen mit der im Stand der Technik üblichen Krümmung der Funktionsflächen der Auskoppelelemente nur in maximal einer Richtung, wie in Fig.3 gezeigt. Auf diese neue Art und Weise werden im ausgekoppelten Licht visuell wahrnehmbare Farbeffekte minimiert oder ganz unterdrückt. Die Erfindung bietet hier also eine deutliche Verbesserung aufgrund der Krümmung der Funktionsflächen 5 der Auskoppelelemente 6 in mindestens zwei Richtungen: Die zusätzliche Krümmung sorgt für eine stärkere Durchmischung der unterschiedlichen Farbanteile des ausgekoppelten Lichtes, was vor allem für Weißlicht wichtig ist, um nicht örtlich-spektral aufgelöste Maxima hervorzurufen, die z.B. als unerwünschte Farb- oder Regenbogeneffekte wahrgenommen werden können.

Vorteilhaft sind die Leuchtmittel 4 an mindestens einer der Schmalseiten des Lichtleiters 3 angeordnet, wobei sich diese Einkoppelseite bzw. diese Einkoppelseiten aus Sicht eines sitzenden oder stehenden Betrachters oben, unten, links und/oder rechts vom Lichtleiter 3 befinden kann bzw. können.

Vorteilhaft wird eine Beleuchtungseinrichtung 1a derart ausgestaltet, dass die Auskoppelemente 6 jeweils eine Funktionsfläche 5 zur definierten Auskopplung von Licht mit einer jeweiligen Krümmung in mindestens zwei Richtungen aufweisen, wobei sich die beiden Formen der Krümmungen der jeweiligen Funktionsfläche 5 in den mindestens zwei Richtungen unterscheiden.

Bevorzugt, wie in Fig.4 als Prinzipskizze gezeigt, werden die Auskoppelemente 6 als Vertiefungen auf einer der Großflächen des Lichtleiters 3 ausgebildet.

Die Hintergrundbeleuchtung 2 besteht beispielsweise aus einem flächigen Strahler, vorzugsweise einem weiteren Lichtleiter mit seitlich oder auf der Rückseite angeordneten weiteren Leuchtmitteln, sowie mindestens einem in den flächigen Strahler integrierten und / oder davor angeordneten Lichtkollimator, wie beispielsweise mindestens einer Prismenfolie und / oder mindestens einem Privacyfilter (Lamellenfilter).

Entsprechend kann also die Hintergrundbeleuchtung 2 grundsätzlich aufgebaut sein wie ein LED-Backlight, beispielsweise als sogenanntes Direct-lit LED Backlight, edge LED Backlight, ein OLED oder als ein anderer Flächenstrahler, auf welchen z.B. mindestens ein permanenter Privacy-Filter (z.B. mit Mikrolamellen oder aber polarisationssensitiv) aufgebracht ist.

Die beiden Betriebsarten B1 und B2 unterscheiden sich schließlich dadurch, dass in der Betriebsart B2 die Hintergrundbeleuchtung 2 ein- und die Leuchtmittel 4 (an der Einkoppelseite des Lichtleiters 3) ausgeschaltet sind, und wobei in der Betriebsart B1 mindestens die Leuchtmittel 4 (an der Einkoppelseite des Lichtleiters 3) -und optional auch die Leuchtmittel 4- eingeschaltet sind. Dabei wird nur Licht berücksichtigt, was ursprünglich von den Leuchtmitteln 4 in den Lichtleiter 3 eingestrahlt und von diesem anschließend wieder über die Auskoppelelemente 6 abgestrahlt wurde, wobei die Abstrahlung nahezu ausschließlich über die Auskoppelemente 6 erfolgt.

Der Lichtleiter besteht vorzugsweise aus einem transparenten, thermoplastischen oder thermoelastischen Polymer, z.B. Polycarbonat (PC).

Als eingeschränkter Winkelbereich kann grundsätzlich jeder Bereich in Frage kommen, der kleiner als der Halbraum vor der Hintergrundbeleuchtung ist; bevorzugt ist hier aber z.B. ein Winkelbereich von +/-20°oder +/-30° horizontal und/oder vertikal oder als Konus um die Flächennormale bzw. einen wählbaren Richtungsvektor auf der Hintergrundbeleuchtung gemeint; kleine Lichtmengen von weniger als 1% bis 5% der Maximal-Helligkeit können bei der Definition des eingeschränkten Winkelbereichs außer Betracht bleiben.

Wichtig für die Ausgestaltung der Erfindung ist, dass das gezielte Auskoppeln von Licht aus dem Lichtleiter 3 nicht durch Streuung, wie bei den meisten handelsüblichen Lichtleitern üblich, erfolgt. Für die Auskopplung mittels die Lichtleiteroberfläche sozusagen verletzenden Streuelementen im Stand der Technik wäre die Erfindung wirkungslos, da die Auskopplung des Lichts in diesem Fall nicht definiert bzw. deterministisch, sondern primär diffus erfolgt. Weiterhin hätte die Auskopplung mittels Streuelementen die negative Folge, dass ein Lichtleiter auch für ihn durch die Großflächen durchdringendes Licht stark streuend wirkt, was insbesondere für seinen Einsatz in Privacy-Anwendungen (also für die Betriebsart B2) ein Ausschlusskriterium darstellt. Es lässt sich also festhalten, dass im Rahmen der Erfindung keine Lichtleiter umfasst sind, deren primärer Ansatz für das Auskoppeln von Licht das Prinzip der Streuung ist. Aus diesem Grund sind insbesondere dreidimensionale Strukturelemente zu bevorzugen, weil diese -bis auf nicht eine vermeidbare Streuung im Rahmen einer vorgebbaren Toleranz- eine deterministische Auskopplung von Licht ermöglichen. Allgemein soll die Streuung des den Lichtleiter 3 durchdringenden Lichts möglichst gering sein.

Die Auskoppelelemente 6 können beim Design bzw. bei der Herstellung des Lichtleiters 3 entsprechend anpassbaren und vorgebbaren Bedingungen für die Auskopplung des Lichts grundsätzlich auf verschiedene Weise in oder auf dem Lichtleiter 3 verteilt werden. Bei den Auskoppelelementen 6 mit Funktionsflächen 5 handelt es sich um lokal begrenzte Strukturänderungen im Volumen oder/und auf den Oberflächen des Lichtleiters 3. Ausdrücklich nicht unter den Begriff des Auskoppelelements 6 fallen daher zusätzliche optische Schichten, die auf den Flächen des Lichtleiters 3 angebracht werden, d.h. z.B. Diffusionsschichten, Reflexionsschichten, (duale) helligkeitsverstärkende, kollimierende (*brightness enhancement film - BEF*) oder auch polarisationsrecycelnde Schichten, wie beispielweise polarisationsselektive Braggspiegel (*(dual) brightness enhancement film - (D)BEF*) oder Drahtgitterpolarisatoren. Diese, nicht unter den Begriff des "Auskoppelelements" fallenden zusätzlichen Schichten werden -wenn überhauptmit dem Lichtleiter 3 nur an den Rändern verbunden, liegen im Bereich der Großflächen meistens jedoch nur lose auf und bilden mit dem Lichtleiter 3 keine physische Einheit. Hingegen bilden auf die Großflächen aufgebrachte Lacke, die sich mit dem Lichtleiter durch chemische Reaktionen oder andere Kräfte (z.B. van der Waals-Kräfte) verbinden, eine physische Einheit, sind nicht mehr voneinander zu trennen; solche Lacke zählen daher nicht als zusätzliche Schicht im oben genannten Sinne.

Die Auskoppelelemente 6 sind in ihrer Anzahl pro Fläche, ihrer Form (einschließlich der jeweiligen Funktionsfläche 5) und in ihrer Ausdehnung derart gewählt, dass der Lichtleiter 3 auf mindestens 50%, bevorzugt auf 80% seiner Fläche, besonders bevorzugt auf seiner ganze Fläche einen durchschnittlichen Haze-Wert kleiner als 20% aufweist, bevorzugt kleiner als 15%, besonders bevorzugt kleiner als 10%, gemessen gemäß ASTM D1003 - wobei hier die Messung gemäß der gebräuchlicheren Prozedur A mit einem Hazemeter als Referenz zugrunde gelegt wird. Dadurch wird Licht, welches den Lichtleiter durch seine Großflächen durchdringt, höchstens geringfügig gestreut wird.

Die Struktur und Verteilung der Auskoppelelemente 6 wird wie oben beschrieben nach den genannten Kriterien vorgegeben, wobei die Wirkung eines jeden Auskoppelelements 6 und dessen Funktionsfläche 5 zumindest näherungsweise bekannt ist und Eigenschaften des Lichtleiters 3 bzw. des aus dem Lichtleiter 3 tretenden Lichts gezielt durch eine vorgebbare Struktur und Verteilung der Auskoppelelemente 6 festgelegt werden können, wobei es insbesondere auf das Verhältnis der Summe der Flächeninhalte der Funktionsflächen 5 zum Flächeninhalt der Gesamtfläche der Großfläche, aus der Licht ausgekoppelt wird, sowie die Formen der Funktionsflächen 5 der Auskoppelelements 6 ankommt.

Die geforderten, für die Erfindung wesentlichen Eigenschaften für die Auskoppelelemente 6 hinsichtlich ihrer Anzahl pro Flächeneinheit, ihrer Form einschließlich der Funktionsfläche 5, ihrer Ausrichtung und Ausdehnung in drei Dimensionen sowie ihrer Verteilung auf mindestens einer der Großflächen und / oder innerhalb des Volumens des Lichtleiters 3 können beispielsweise mit einer Optik-Simulationssoftware wie etwa "Light-Tools" der Firma Synopsis oder anderer Anbieter bestimmt und dann entsprechend physisch umgesetzt werden.

Mit Referenz auf Fig.1 umfasst ein Bildschirm 1b, der in mindestens zwei Betriebsarten B1 für einen freien Sichtmodus und B2 für einen eingeschränkten Sichtmodus, in welchem Licht von der Beleuchtungseinrichtung 1a in einem gegenüber dem freien Sichtmodus eingeschränkten Winkelbereich abgestrahlt wird, betrieben werden kann,
- eine Beleuchtungseinrichtung 1a wie vorstehend beschrieben,
- in Betrachtungsrichtung vor der Beleuchtungseinrichtung 1a einen transmissiven Bildgeber 1, vorzugsweise ein LCD-Panel.

Selbstredend ist für alle benötigten Komponenten (z.B. Bildgeber 1, Leuchtmittel 4, Hintergrundbeleuchtung 2 etc.) eine entsprechende Ansteuerung vorhanden.

In allen vorgenannten Ausgestaltungen können die besagten Leuchtmittel 4 LEDs bzw. LED-Zeilen oder Laserdioden sein. Andere Varianten sind denkbar und liegen im Rahmen der Erfindung.

Die vorstehend beschriebene erfindungsgemäße Beleuchtungseinrichtung und der damit umsetzbare Bildschirm lösen die gestellte Aufgabe: Es werden praktisch gut umsetzbare Lösungen erlaubt, um eine sichere Darstellung von Informationen durch einen wahlweise eingeschränkten Betrachtungswinkel zu realisieren, während in einer weiteren Betriebsart eine freie, im Betrachtungswinkel uneingeschränkte, Sicht möglich ist. Die Erfindung ist mit einfachen Mitteln preisgünstig realisierbar. In beiden Betriebsarten ist die native Auflösung des verwendeten Bildschirms nutzbar. Außerdem werden durch die Lösung visuell wahrnehmbare Artefakte wie etwa Farbeffekte, z.B. Regenbogeneffekte, vermindert oder ganz verhindert.

Die vorangehend beschriebene Erfindung kann vorteilhaft überall da angewendet werden, wo vertrauliche Daten angezeigt und / oder eingegeben werden, wie etwa bei der PIN-Eingabe oder zur Datenanzeige an Geldautomaten oder Zahlungsterminals oder zur Passworteingabe oder beim Lesen von Emails auf mobilen Geräten. Die Erfindung kann -wie weiter oben beschrieben- auch im PKW angewendet werden.

### Bezugszeichenliste

- 1: transmissiver Bildgeber
- 1a: Beleuchtungseinrichtung
- 1b: Bildschirm
- 2: Hintergrundbeleuchtung
- 3: Lichtleiter
- 4: Leuchtmittel
- 5: Funktionsfläche
- 6: Auskoppelelement

## Patentansprüche

1. Beleuchtungseinrichtung (1a) für einen Bildschirm (1b), die in mindestens zwei Betriebsarten B1 für einen freien Sichtmodus und B2 für einen eingeschränkten Sichtmodus, in welchem Licht von der Beleuchtungseinrichtung in einem gegenüber dem freien Sichtmodus eingeschränkten Winkelbereich abgestrahlt wird, betrieben werden kann, umfassend
- eine flächenartig ausgedehnte Hintergrundbeleuchtung (2), die Licht in den eingeschränkten Winkelbereich abstrahlt,
- einen in Betrachtungsrichtung vor der Hintergrundbeleuchtung (2) gelegenen plattenförmigen Lichtleiter (3) mit zwei Großflächen und Schmalseiten, die die Großflächen an deren Kanten verbinden, wobei
- der Lichtleiter (3) auf mindestens einer der Großflächen und / oder innerhalb seines Volumens Auskoppelelemente (6) aufweist,
- jedes Auskoppelelement (6) mindestens eine Funktionsfläche (5) zur definierten Auskopplung von Licht aufweist, an der Licht aus dem Lichtleiter (3) ausgekoppelt wird,
- seitlich an mindestens einer Schmalseite des Lichtleiters (3) angeordnete Leuchtmittel (4),
- wobei in der Betriebsart B2 die Hintergrundbeleuchtung (2) ein- und die Leuchtmittel (4) ausgeschaltet sind, und wobei in der Betriebsart B1 mindestens die Leuchtmittel (4) eingeschaltet sind,
- **dadurch gekennzeichnet, dass** für mindestens zwei Prozent der Auskoppelelemente (6) gilt, dass die Funktionsfläche (5) zur definierten Auskopplung von Licht in mindestens zwei Richtungen eine Krümmung aufweist, wobei sich die beiden Formen der Krümmungen der jeweiligen Funktionsfläche (5) in den mindestens zwei Richtungen unterscheiden, wodurch von den Leuchtmitteln (4) herrührendes und an mindestens einer der Schmalseiten in den Lichtleiter (3) eingekoppeltes Licht verschiedener Wellenlängen auf dem jeweiligen Lichtweg innerhalb des Lichtleiters (3) bis zum jeweiligen Ort der Auskopplung des Lichtes gemischt wird, wodurch visuell wahrnehmbare Farbeffekte minimiert oder ganz unterdrückt werden.

2. Beleuchtungseinrichtung (1a) nach Anspruch 1, **dadurch gekennzeichnet, dass** die Auskoppelelemente (6) die Form von Prismatoiden, Scutoiden und/oder konvexen Körpern aufweisen.

3. Beleuchtungseinrichtung (1a) nach Anspruch 1 oder 2, **dadurch gekennzeichnet, dass** die jeweilige Krümmung der Funktionsflächen (5) der Auskoppelemente (6) in einer ersten Richtung und in einer dazu senkrechten, zweiten Richtung jeweils kreisförmig, elliptisch, exponentiell oder bezierkurvenförmig ist.

4. Beleuchtungseinrichtung (1a) nach einem der Ansprüche 1 bis 3, **dadurch gekennzeichnet, dass** die Auskoppelemente (6) als Vertiefungen oder Erhöhungen auf einer der Großflächen ausgebildet sind.

5. Bildschirm (1b), der in mindestens zwei Betriebsarten B1 für einen freien Sichtmodus und B2 für einen eingeschränkten Sichtmodus betrieben werden kann, umfassend
- eine Beleuchtungseinrichtung (1a) gemäß einem der Ansprüche 1 bis 4,
- in Betrachtungsrichtung vor der Beleuchtungseinrichtung (1a) einen transmissiven Bildgeber (1), vorzugsweise ein LCD-Panel.

## Claims

1. A lighting device (1a) for a screen (1b), which can be operated in at least two operating modes, B1 for a free viewing mode, and B2 for a restricted viewing mode in which light from the lighting device is emitted within a restricted angular range compared to the free viewing mode, said device comprising
- a flatly extended backlight (2), which emits light in the restricted angular range,
- a plate-shaped light guide (3) which is located in front of the backlight (2) in the direction of view and which has two large surfaces and narrow sides that connect the large surfaces at their edges, wherein
- the light guide (3) has coupling-out elements (6) on at least one of the large surfaces and/or within its volume,
- each coupling-out element (6) has at least one functional surface (5) for the defined coupling-out of light, at which light is coupled out of the light guide (3),
- illuminants (4) arranged laterally on at least one narrow side of the light guide (3),
- wherein, in operating mode B2, the backlight (2) is switched on and the illuminants (4) are switched off, and in operating mode B1, at least the illuminants (4) are switched on,
- **characterized in that**, for at least two percent of the coupling-out elements (6), the functional surface (5) for the defined coupling-out of light has a curvature in at least two directions, wherein the two forms of curvature of the respective functional surface (5) differ in the at least two directions, whereby light of different wavelengths originating from the illuminants (4) and coupled into the light guide (3) at at least one of the narrow sides is mixed along the respective light path within the light guide (3) up to the respective point at which the light is coupled out,
which minimizes or completely suppresses visually perceptible color effects.

2. The lighting device (1a) according to claim 1, **characterized in that** the coupling-out elements (6) are shaped like prismatoids, scutoids, and/or convex bodies.

3. The lighting device (1a) according to claim 1 or 2, **characterized in that** the respective curvature of the functional surfaces (5) of the coupling-out elements (6) in a first direction and in a second direction perpendicular thereto is, in each case, circular, elliptical, exponential, or Bézier-shaped.

4. The lighting device (1a) according to any one of claims 1 to 3, **characterized in that** the coupling-out elements (6) are formed as recesses or raised areas on one of the large surfaces.

5. A screen (1b), which can be operated in at least two modes, B1 for a free viewing mode, and B2 for a restricted viewing mode, comprising
- a lighting device (1a) according to any one of claims 1 to 4,
- a transmissive imager (1), preferably an LCD panel, located in front of the lighting device (1a) in the direction of view.

## Revendications

1. Dispositif d'éclairage (1a) pour un écran (1b), qui peut fonctionner dans au moins deux modes de fonctionnement, B1 pour un mode de visualisation libre et B2 pour un mode de visualisation restreinte, dans lequel la lumière venant du dispositif d'éclairage est émise dans un champ angulaire restreint par rapport au mode de visualisation libre, ledit dispositif comprenant
- un moyen de rétroéclairage (2) qui s'étend sur une grande surface et qui émet de la lumière dans le champ angulaire restreint,
- un guide de lumière (3) en forme de plaque, situé devant le moyen de rétroéclairage (2) dans la direction d'observation, comportant deux grandes faces et des côtés étroits reliant les grandes faces au niveau de leurs bords, dans lequel
- le guide de lumière (3) présente des éléments de découplage (6) sur au moins une des grandes faces et/ou dans son volume,
- chaque élément de découplage (6) comporte au moins une surface fonctionnelle (5) destinée au découplage défini de la lumière, au niveau de laquelle la lumière est découplée du guide de lumière (3),
- des moyens d'éclairage (4), qui sont disposés latéralement sur au moins un côté étroit du guide de lumière (3),
- où, en mode de fonctionnement B2, le moyen de rétroéclairage (2) est allumé et les moyens d'éclairage (4) sont éteints, et où, en mode de fonctionnement B1, au moins les moyens d'éclairage (4) sont allumés,
- **caractérisé en ce que**, pour au moins deux pour cent des éléments de découplage (6), la surface fonctionnelle (5) destinée au découplage défini de la lumière présente une courbure dans au moins deux directions, les deux formes de courbure de la surface fonctionnelle respective (5) différant dans ces au moins deux directions, ce qui permet de mélanger, sur le trajet optique correspondant à l'intérieur du guide de lumière (3) jusqu'au point de découplage respectif de la lumière, la lumière de différentes longueurs d'onde provenant des moyens d'éclairage (4) et couplée dans le guide de lumière (3) au niveau d'au moins l'un des côtés étroits,
ce qui permet de minimiser, voire de supprimer totalement, les effets de couleur visibles.

2. Dispositif d'éclairage (1a) selon la revendication 1, **caractérisé en ce que** les éléments de découplage (6) se présentent sous la forme de prismatoïdes, de scutoïdes et/ou de corps convexes.

3. Dispositif d'éclairage (1a) selon la revendication 1 ou 2, **caractérisé en ce que** la courbure respective des surfaces fonctionnelles (5) des éléments de découplage (6) dans une première direction et dans une deuxième direction perpendiculaire à celle-ci est, dans chaque cas, circulaire, elliptique, exponentielle ou en forme de courbe de Bézier.

4. Dispositif d'éclairage (1a) selon l'une quelconque des revendications 1 à 3, **caractérisé en ce que** les éléments de découplage (6) sont réalisés sous forme de creux ou de reliefs sur l'une des grandes faces.

5. Écran (1b), qui peut fonctionner dans au moins deux modes de fonctionnement, B1 pour un mode de visualisation libre et B2 pour un mode de visualisation restreinte, ledit écran comprenant
- un dispositif d'éclairage (1a) selon l'une quelconque des revendications 1 à 4,
- un imageur transmissif (1), de préférence un écran LCD, situé devant le dispositif d'éclairage (1a) dans la direction d'observation.
